# EUROPEAN PATENT APPLICATION

(11) **EP 2 796 079 A1**
(43) Date of publication of application: **29.10.2014**
(21) Application number: 14165373.3
(22) Date of filing: 22.04.2014
(51) Int. Cl.: A47J 43/25

(54) **Food shredder attachment**

(30) Priority: 22.04.2013 CN 201310140483
(71) Applicant: Main Power Industrial (Shenzhen) Co. Ltd., Shenzhen, Guangdong 518118 (CN)
(72) Inventor: Choi, Mei Chee June, Kowloon (HK); Yu, Xin Xiang, 518118 Shenzhen (CN); Deng, Yun, 518118 Shenzhen (CN)
(74) Representative: Ward, David Ian

(57) **Abstract**

The present invention relates to a food shredder attachment comprising a frusto-conical shaped shredder body having a receiver part for removably coupling the shredder body to a driven source, a shredder part (5) and a sieve hood (10), the sieve hood having a first end cooperating with the shredder part and an open second end. The attachment also comprises a feed tube (2) cooperating with the shredder part for introducing food items into the shredder body, a blade removably located within the shredder body and having a shredding portion (21) and a sieve portion (23), and a water tank (40) removably attachable below the sieve hood, the sieve hood having a water outlet to the water tank.

## Description

### Field of the Invention

The current invention relates food preparation apparatus and in particular to a food shredding attachment for a kitchen appliance or other food preparation appliance.

### Background to the Invention

A food shredder, common referred to as a grater, is a kitchen utensil used to shred (or grate) hard and soft foods and vegetables into pieces. Typical foods used with a shredder include, but are not limited to, lettuce, cabbage, cheese, lemon or orange peel (to create zest), nuts, potatoes and coconut food for example.

A shredder comprises a hard, such as a metal, sheet having a plurality of apertures each having a sharpened edge or blade at it periphery. Food stuffs are moved access the surface while being pressed to the surface causing the food to be shredded by the edges of the apertures. Some shredders comprise a rotating disk such that the food is pressed against the moving disk. The disk may be rotated manually by a handle or via a motorised means.

### Summary of the Invention

According to the invention there is provided a food shredder attachment comprising:
a frusto-conical shaped shredder body having a receiver part for removably coupling the shredder body to a driven source, a shredder part and a sieve hood, the sieve hood having a first end cooperating with the shredder part and an open second end.
a feed tube cooperating with the shredder part for introducing with food items into the shredder body,
a blade removably located within the shredder body and having a shredding portion and a sieve portion, and a water tank removably attachable below the sieve hood, the sieve hood having a water outlet to the water tank.

Preferably, the shredding portion of the blade is removably securable to the sieve portion by a first rotationally releasable connection.

Preferably, the food shredder further includes a sieve cover connectable with the sieve portion of the blade by a second rotationally releasable connection,

Preferably, the food shredder attachment further comprises a spindle rotateable located with the receiver part, the spindle having a engager end adapted to couple to a driven source and an engagable end, the blade shredding portion having a engager features for co-operating with the engagable end of the spindle when the shredder blade is located within the shredder body.

Preferably, one of the first or second rotationally releasable connections is a bayonet type connection.

Preferably, the first and second rotationally releasable connections is a bayonet type connection.

Preferably, wherein the first rotationally releasable connection comprises bayonet connectors.

Preferably, the shredder body is frusto- conical.

Preferably, the blade is frusto-conical.

Preferably, one or both of the first and second rotationally releasable connections is releasably by hand without the use of tools.

### Description of the Drawings

The invention will now be described by way of example only with reference to the appended drawings in which show an exploded perspective, top, bottom, right side, left side, front and back views is a shredder according to the invention.

### Detailed Description

The following description is given by way of example only to illustrate the invention and is not intended to limit the scope of use or functionality of the invention. In particular, the invention is not limited in its application to the details of construction and the arrangements of components set forth in the following description or illustrated in the accompanying drawings. The invention is capable of other embodiments and of being practiced or being carried out in various ways. Also, it is to be understood that the phraseology and terminology used is for the purpose of description and should not be regarded as limiting.

Referring to the drawings there is shown a food shredder attachment 1 for a kitchen appliance or other food preparation appliance. The shredder attachment 1 has a frusto-conical shaped shredder body having a shredder portion 5 and a sieve hood portion 10. The shredder portion 5 includes a receiver part 7 for removably coupling the shredder body to a kitchen appliance or other food preparation appliance. At a proximal end of the shredder portion 5 is male type receiver part 7 having a pair of diametrically opposed radial bayonet-type coupling tabs 8. The receiver part 7 is received in a receptor part of a kitchen appliance or other food preparation appliance for coupling the shredder attachment 1 to the kitchen appliance or other food preparation appliance. The receiver part 7 is received within the receptor part rotationally off-set by say ¼ turn and then rotated to engage the radial bayonet-type coupling tabs 8 with corresponding coupling slots of the receptor for locking the shredder attachment 1 to the kitchen appliance or other food preparation appliance. A spindle 15 is rotateable located with the receiver part 7 of the shredder portion 5. The spindle 15 has a engager end 16 adapted to couple to a driven source of the kitchen appliance or other food preparation appliance, and an engagable end 17 with engagable connection features.

The shredder portion 5 has a frusto-conical wall 6. There is a circular opening in the upper body wall 6. Communicating with the opening and extending upwardly from the body wall 6 is a generally circular feed hopper tube 2. The feed hopper tube 2 has an inlet opening 3 at its upper end and an outlet opening 4 at its lower end with a generally circular wall extending between the inlet opening 3 at its upper end and an outlet opening 4 at its lower end. In a preferred embodiment the circular feed hopper tube 2 has a mildly frusto-conical shape with the inlet opening 3 being slightly larger in diameter than the outlet opening 4 at the lower end. The inlet opening 3 and outlet opening 4 are concentrically aligned. In alternative embodiments the circular feed hopper tube 2 may also be generally cylindrical with the inlet opening 3 and outlet opening 4 at the lower end having substantially the same diameters. Food to be shredded is introduced into the shredder attachment 1 through the feed hopper tube 2 via a pusher 9. The pusher 9 has an outer diameter generally the same as an inner diameter of the circular feed hopper tube 2 and a length generally corresponding to a distance between the inlet opening 3 and outlet opening 4. A handle part 29 at one end of the pusher 9 allows the pusher to be introduced into the inlet opening 3 of the feed tube 2 and moved down the tube to the outlet opening 4 for pushing food to be shredded though the feed tube 2.

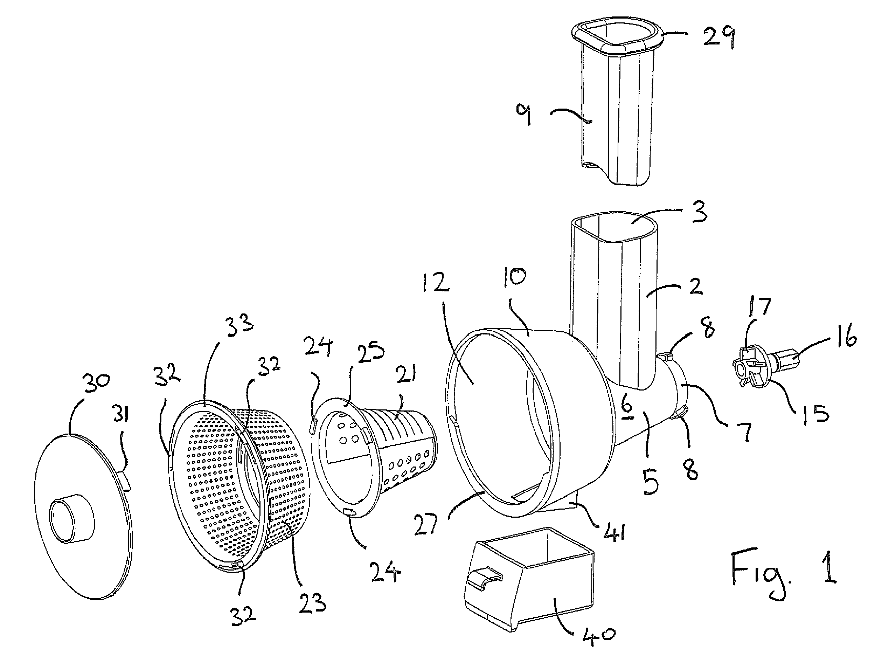

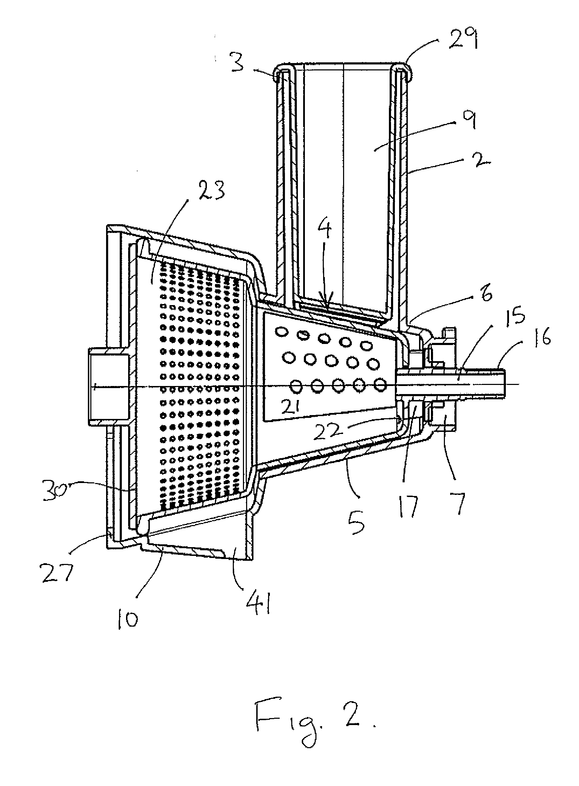

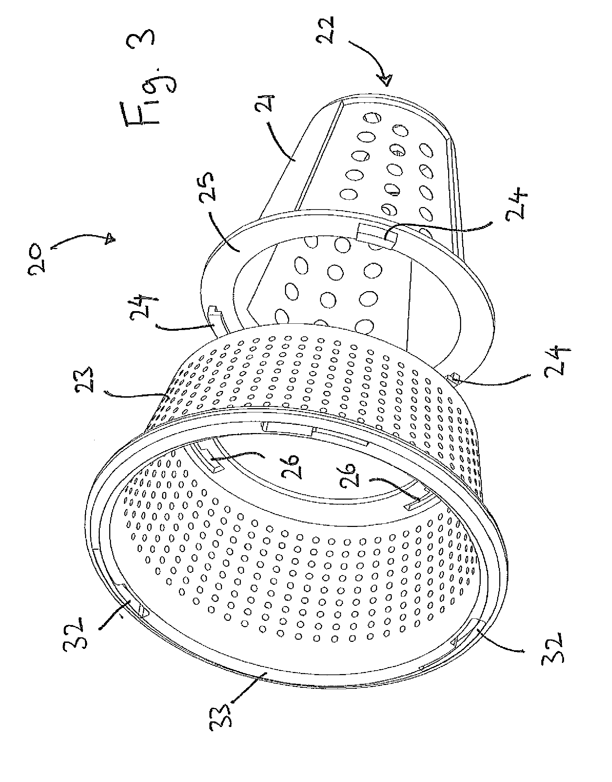

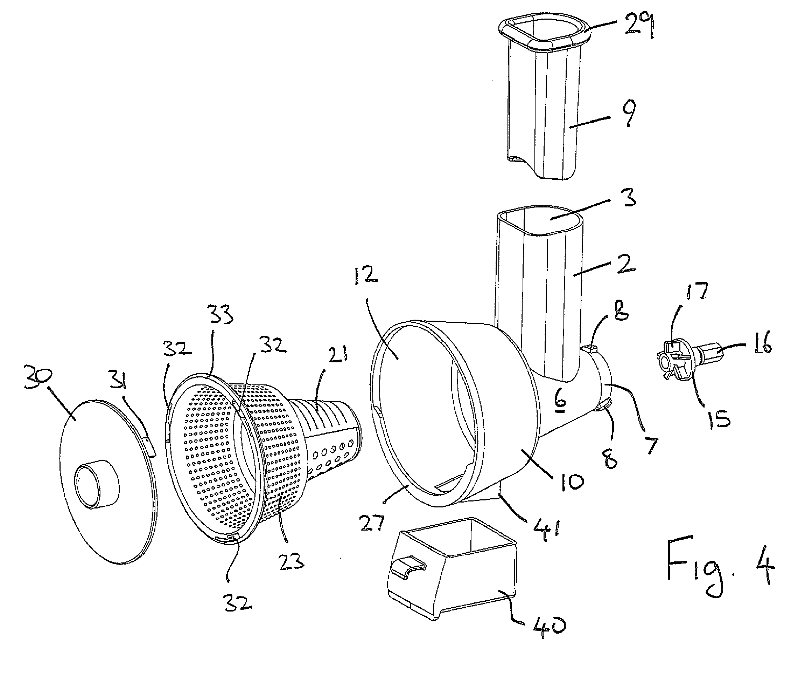

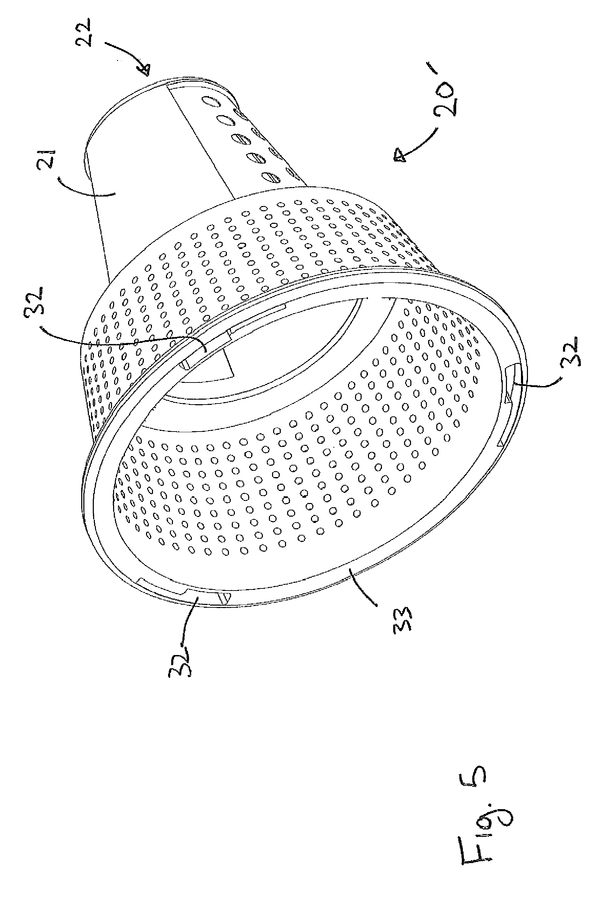

Figure 1 and 3 show a preferred embodiment of a frusto-conical blade 20 that is removably receivable within the sieve hood 10. The shredder 20 has a shredder blade 21 with engager features 22 at its first end for co-operating with the engagable end 17 of the spindle 5 when the shredder blade is located within the shredder body. The blade 20 also includes a frusto-conical sieve portion 23 that removably couples at the distal end of the shredder blade 21 via first rotationally releasable connection features. The releasable connection features include circumferentially spaced longitudinally extending bayonet-type coupling tabs 24 on a mating face 25 of the shredder blade 21, and co-operating key-hole type bayonet openings 26 in a complimentary mating face 27 of the sieve portion 23. The shredder blade 21 and sieve portion 23 are joined by introducing the mating faces 25, 27 together rotationally off-set by say 1/8^{th} of a turn and then rotated to engage the bayonet-type coupling tabs 24 with corresponding coupling slots 26. A sieve cover 30 releasably connects to the sieve portion via second rotationally releasable connection features. The second releasable connection features include circumferentially spaced longitudinally extending bayonet-type coupling tabs 31 on a mating face of the sieve cover 30, and co-operating key-hole type bayonet openings 32 in a complimentary mating face 33 of the sieve portion 23. The sieve cover 30 and sieve portion 23 are joined by introduce the mating faces together rotationally off-set by say 1/8^{th} of a turn and then rotated to engage the bayonet-type coupling tabs 31 with corresponding coupling slots 32. A water tank 40 is removably attached below the sieve portion 10. The sieve hood has a water outlet 41 to the water tank 40. In an alternative embodiment of the frusto-conical blade 20 is shown in Figures 4 and 5 in which the shredder portion and sieve portions of the blade are one part.

The shredder blade 20 is removably received into the sieve hood 10 from the shredding end 12. In situ the shredder blade is within the body 5 and the drive coupling 22 extends within the receiver part 7 of the shredder portion 5. When the shredder attachment 1 is connected to a kitchen appliance or other food preparation appliance the drive coupling communicates with a corresponding driven coupling of the kitchen appliance or other food preparation appliance for turning the shredder 20. A splash guard 27 is located at the end of the sieve hood 10 to retain the shredder 20 within the hood 10. A lip under the slash guard transports shredded food to a waiting receptacle.

In use the food shredder attachment 1 is removably attached to a so adapted kitchen appliance or other food preparation appliance having a receptor part and driven coupling for receiving correspondingly the receiver part 7 and drive coupling 22 of the food shredder attachment 1. The driven coupling drives the shredder 20 of the food shredder attachment 1. Pieces of food to be shredded are introduced into the feed tube 2 and the pusher 9 used to push the pieces of food down the feed tuber through the opening 4 into the sieve hood 10. The driven shredder blade 21 shreds the food pieces and transports then to the sieve portion 23 of the shredder 20. Water is removed by the sieve and pass throughout he water outlet 31 to the water tank 30.

## Claims

1. A food shredder attachment comprising:
a frusto-conical shaped shredder body having a receiver part for removably coupling the shredder body to a driven source, a shredder part and a sieve hood, the sieve hood having a first end cooperating with the shredder part and an open second end,
a feed tube cooperating with the shredder part for introducingh food items into the shredder body,
a blade removably located within the shredder body and having a shredding portion and a sieve portion, and
a water tank removably attachable below the sieve hood, the sieve hood having a water outlet to the water tank.

2. The food shredder of claim 1 wherein the shredding portion of the blade is removably securable to the sieve portion by a first rotationally releasable connection.

3. The food shredder of claim 1 or claim 2 further including a sieve cover connectable with the sieve portion of the blade by a second rotationally releasable connection,

4. The food shredder attachment of any one of claims 1 to 3 further comprising a spindle rotateable located with the receiver part, the spindle having a engager end adapted to couple to a driven source and an engagable end, the blade shredding portion having a engager features for co-operating with the engagable end of the spindle when the shredder blade is located within the shredder body.

5. The food shredder attachment of any one of claims 2 to 4 wherein one of the first or second rotationally releasable connections is a bayonet type connection.

6. The food shredder attachment of any one of claims 2 to 5 wherein the first and second rotationally releasable connections is a bayonet type connection.

7. The food shredder attachment of any one of claims 2 to 5 wherein the first rotationally releasable connection comprises bayonet connectors.

8. The food shredder attachment of any preceding claim wherein the blade is frusto-conical.

9. The food shredder attachment of any one of claims 2 to 8 wherein one or both of the first and second rotationally releasable connections is releasably by hand without the use of tools.
